(19) Europäisches Patentamt / European Patent Office / Office européen des brevets

(11) **EP 4 624 419 A1**

(12) **EUROPEAN PATENT APPLICATION**
published in accordance with Art. 153(4) EPC

(43) Date of publication:
**01.10.2025 Bulletin 2025/40**

(21) Application number: **23894420.1**

(22) Date of filing: **08.11.2023**

(51) International Patent Classification (IPC):
**C01B 32/168** (2017.01)   **H01M 4/62** (2006.01)
**H01M 4/139** (2010.01)

(52) Cooperative Patent Classification (CPC):
**C01B 32/168; C09C 1/46; C09D 17/00; H01B 1/04;
H01B 1/24; H01M 4/13; H01M 4/139; H01M 4/62;
Y02E 60/10**

(86) International application number:
**PCT/JP2023/040137**

(87) International publication number:
**WO 2024/111409 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.11.2022 JP 2022187584**

(71) Applicants:
• **artience Co., Ltd.
Chuo-ku
Tokyo 104-0031 (JP)**

• **TOYOCOLOR CO., LTD.
Tokyo 104-8381 (JP)**

(72) Inventors:
• **MORITA, Yu
Tokyo 104-8381 (JP)**
• **FUKAGAWA, Soichiro
Tokyo 104-8381 (JP)**

(74) Representative: **SSM Sandmair
Patentanwälte Rechtsanwalt
Partnerschaft mbB
Joseph-Wild-Straße 20
81829 München (DE)**

(54) **CARBON MATERIAL, CARBON MATERIAL DISPERSION COMPOSITION, MIXTURE SLURRY, ELECTRODE FILM, SECONDARY BATTERY, AND VEHICLE**

(57)    The present invention can provide a carbon material which exhibits high dispersibility; and a carbon material dispersion composition. The present invention can provide: a mixture slurry able to yield an electrode film having a high electrical conductivity; and, more specifically, a secondary battery having excellent rate characteristics and cycle characteristics; and a vehicle having said secondary battery. Provided is a carbon material that satisfies requirements (1) and (2). (1) The BET specific surface area is $400 \text{ m}^2/\text{g}$ to $650 \text{ m}^2/\text{g}$. (2) **In** powder X-Ray diffraction analysis, at least two peaks are present within the diffraction angle range $2\theta=24.0°\text{-}27.0°$.

FIG. 1

**Description**

Technical Field

The invention relates to a carbon material and a carbon material dispersion composition. More specifically, the invention relates to a carbon material dispersion composition including a carbon material, a dispersant, and a dispersion medium; a mixture slurry including the carbon material dispersion composition and an active substance; an electrode film coated with the mixture slurry; a secondary battery including an electrode having the electrode film and an electrolyte; and a vehicle including the secondary battery.

Related Art

With the widespread adoption of electric vehicles and the miniaturization, weight reduction and performance enhancement of portable devices, there is a demand for secondary batteries with high energy density, and further, for an increased capacity of such secondary batteries. With such background, due to the properties of high energy density and high voltage, non-aqueous electrolyte secondary batteries, particularly lithium-ion secondary batteries, using non-aqueous electrolytes, are used in many devices.

As negative electrode materials used in such lithium-ion secondary batteries, carbon materials represented by graphite, which have a large charge-discharge capacity per unit mass at a base potential close to lithium (Li), are used. However, the charge-discharge capacity per mass of the electrode materials are being used to a point close to the theoretical values, and the energy density per mass as a battery is approaching its limit. Therefore, to increase the utilization rate of the electrode, studies are conducted to reduce conductive additives and binders that do not contribute to discharge capacity.

As conductive additives, carbon materials such as carbon black, ketjen black, fullerene, graphene, and fine carbon materials are used, and in recent years, carbon nanotubes, which are a type of fine carbon material with a large specific surface area, are being widely used. For example, it is known that an electrode film formed by coating a mixture slurry containing a carbon nanotube dispersion composition and an active substance has low electrode resistance, and the load resistance and the cycle properties of the battery are improved (see, for example, Patent Documents 1, 2).

However, conventional carbon nanotubes with a large specific surface area have low wettability to solvents, making it difficult to prepare a dispersion composition with high concentration and excellent dispersion stability.

Therefore, there is a need to develop carbon nanotubes with excellent wettability to solvents, high specific surface area, and superior conductivity.

As a method for improving the properties of carbon nanotubes, for example, a method of performing thermal treatment on carbon nanotubes under an inert atmosphere at 1000°C to 3000°C has been proposed (see Patent Documents 1 and 3). However, such methods mainly aim to remove metals and metal oxides contained in the obtained carbon nanotubes, and detailed studies about the thermal treatment of carbon nanotubes with a large specific surface area have not been conducted. As a result, dispersibility and conductivity cannot be achieved simultaneously.

Citation List

Patent Literature

Patent Document 1: Japanese Patent No. 6586197
Patent Document 2: Japanese Patent Application Laid-open No. 2011-70908
Patent Document 3: Japanese Patent No. 6590034

SUMMARY OF INVENTION

Technical Problem

Therefore, the issue to be solved by the invention is to provide a carbon material and a carbon material dispersion composition having high dispersibility and conductivity. Additionally, the invention aims to provide a mixture slurry that can produce an electrode film with high conductivity, and more specifically, to provide a secondary battery with excellent rate properties and cycle properties, and a vehicle that has improved safety and fuel efficiency by having such secondary battery.

Solution to Problem

The inventors of the invention have conducted intensive research to solve the issues. The inventors found that, with the carbon material including multi-layered carbon nanotubes having a BET specific surface area of 400 $m^2$/g to 650 $m^2$/g and further exhibiting at least two peaks at a diffraction angle 2θ=24.0° to 27.0° in a powder X-ray diffraction analysis, the carbon material exhibits high dispersibility. Additionally, the inventors found that, by using such carbon material, an electrode film with excellent conductivity can be obtained, and a secondary battery with superior rate properties and cycle properties can be obtained. Based on the findings, the inventors have arrived at the invention.

That is, the invention includes embodiments as follows. However, the embodiments of the invention are not limited to the following.

[1] A carbon material includes multi-layered carbon nanotubes and satisfies (1) and (2) as follows:

(1) a BET specific surface area is 400 $m^2$/g to 650 $m^2$/g; and
(2) in a powder X-Ray diffraction analysis, at least two peaks are present within a range of a diffraction angle 2θ=24.0°-27.0°.

[2] In the carbon material of [1], in the powder X-Ray diffraction analysis, when a low-angle side peak intensity is set as A and a high-angle side peak intensity is set as B within the range of the diffraction angle 2θ=24.0°-27.0°, a B/A ratio is 1.0 to 2.5.

[3] In the carbon material of [1] or [2], a purity is 99.9 mass% or more.

[4] In the carbon material in any one of [1] to [3], in a Raman spectrum, when a maximum peak intensity in a range of 1560 $cm^{-1}$ to 1600 $cm^{-1}$ is set as G and a maximum peak intensity in a range of 1310 $cm^{-1}$ to 1350 $cm^{-1}$ is set as D, a G/D ratio is 1.0 to 4.5.

[5] A carbon material dispersion composition includes: the carbon material in any one of [1] to [4]; a dispersant; and a dispersion medium.

[6] In the carbon material dispersion composition according to [5], after the carbon material dispersion composition is prepared, a viscosity of the carbon material dispersion composition, after being stored for a week under a condition of 60°C, obtained by measuring at 25°C and a rotor rotation speed of 6 rpm by using a B-type viscometer is 500 mPa·s to 20,000 mPa·s.

[7] The carbon material dispersion composition according to [5] or [6] includes a fluorine resin.

[8] A mixture slurry includes: the carbon material dispersion composition according to any one of [5] to [7]; and an active substance.

[9] An electrode film is formed from the mixture slurry according to [8].

[10] A secondary battery includes: an electrode, having the electrode film according to [9]; and an electrolyte.

[11] A vehicle includes the secondary battery according to [10].

[12] A method for preparing a carbon material dispersion composition includes a process of mixing: a carbon material dispersion composition (I) comprising a carbon material, a dispersant, and a dispersion medium; single-layered carbon nanotubes; and a carbon material dispersion composition (II), excluding a case of being the carbon material dispersion composition (I), and including single-layered carbon nanotubes and a fluorine resin. The carbon material includes multi-layered carbon nanotubes and satisfies (1) and (2) as follows:

(1) a BET specific surface area is 400 $m^2$/g to 650 $m^2$/g; and
(2) in a powder X-Ray diffraction analysis, at least two peaks are present within a range of a diffraction angle 2θ=24.0°-27.0°.

Effects of Invention

The carbon material including multi-layered carbon nanotubes of the invention excels in dispersibility, and, by using such carbon material, a carbon material dispersion composition, a mixture slurry, and an electrode film that also excel in conductivity can be obtained. Moreover, a secondary battery excelling in rate properties and cycle properties can be obtained. As a result, it can be suitably used even for vehicle applications such as hybrid vehicles, plug-in hybrid vehicles, and electric vehicles, where high capacity, high output, and high durability are required for the secondary batteries to be mounted.

BRIEF DESCRIPTION OF DRAWINGS

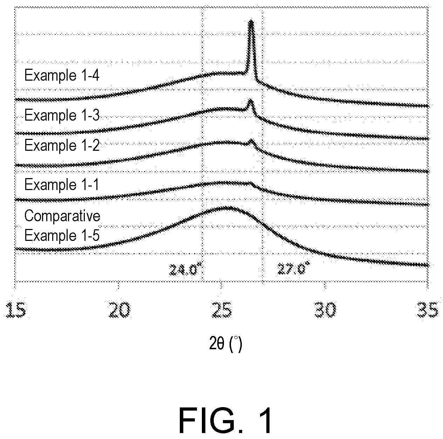

[FIG. 1] FIG. 1 is an XRD spectrum of carbon materials used in the examples or comparative examples of the present invention. It can be confirmed that the carbon materials of the examples have two peaks within a diffraction angle range of 2θ = 24.0° to 27.0°.

DESCRIPTION OF EMBODIMENTS

The following describes in detail the carbon material, carbon material dispersion composition, mixture slurry, electrode film, and secondary battery of the .invention, but the invention is not limited thereto. Specific numerical values in the specification are values obtained by methods disclosed in the embodiments or examples. In the specification, carbon nanotubes may be referred to as "CNT".

In addition, in the specification, the numerical range specified by using "to" includes values described before and after "to" as the range of lower limit and upper limit values. Unless otherwise noted, various components appearing in the specification may be used alone independently or in combination of two or more types.

<<Carbon material>>

The carbon material of the embodiment includes multi-layered carbon nanotubes and satisfies (1) and (2) as follows.

(1) The BET specific surface area is 400 $m^2$/g to 650 $m^2$/g.
(2) In a powder X-Ray diffraction analysis, at least two peaks are present within the range of the diffraction angle 2θ=24.0°-27.0°.

Carbon nanotubes have a shape in which planar graphite is wound to be cylindrical. Single-layered carbon nanotubes have a structure in which a single layer of graphite is rolled, while multi-layered carbon nanotubes have a structure in which two or more layers of graphite are rolled. In addition, the sidewalls of carbon nanotubes do not necessarily have to exhibit a graphite structure. For example, carbon nanotubes with sidewalls having an amorphous structure can also be used as carbon nanotubes. Although the main component of the carbon material of the embodiment is preferably multi-layered carbon nanotubes, single-layered carbon nanotubes may also be mixed. The main component refers to a component with the highest content ratio among the components forming the carbon material.

Specifically, the content ratio of the multi-layered carbon nanotubes included in the carbon material of the embodiment is preferably, in 100 mass% of the carbon material, 50 mass% or more and 99.9 mass% or less and more preferably 60 mass% or more and 98 mass% or less. The content of the multi-layered carbon nanotubes can be determined, for example, by heating from 25°C to 600°C in a nitrogen atmosphere by using TG-DTA, then lowering the heating temperature to 400°C, switching the atmosphere gas from nitrogen to air, and heating from 400°C to 1000°C. At this time, the amount of weight loss when heated to 600°C in the nitrogen atmosphere can be considered as the weight of amorphous carbon, the amount of weight loss when heated to 800°C after switching to the air atmosphere can be considered as the weight of multi-layered carbon nanotubes, and the amount of weight loss when heated from 800°C to 1000°C can be considered as the weight of crystalline carbon.

By including multi-layered carbon nanotubes, when the carbon material is used as the conductive material of the secondary battery, the load resistance and the cycle properties of the secondary battery can be improved.

The carbon material of the embodiment has a BET specific surface area of 400 $m^2$/g to 650 $m^2$/g, preferably 450 $m^2$/g to 600 $m^2$/g, and more preferably 450 $m^2$/g to 550 $m^2$/g.

In addition to (2), by setting the BET specific surface area within the range of 400 $m^2$/g to 650 $m^2$/g as in (1), an efficient conductive network can be formed by using a small amount, and the amount of the conductive material in the electrode can be reduced. This increases the design flexibility of the battery, such as increasing the amount of the active substance or binder resin. Furthermore, during the preparation of the mixture slurry, it becomes easier for the active substance and the carbon nanotubes to form a composite. Therefore, an electrode film having a homogeneous conductive network where carbon nanotubes cover the active substance surface can be obtained easily, the electrolyte decomposition reaction at the interface between the electrolyte and the active substance can be suppressed, and the cycle properties of the battery can be improved. For example, the carbon material of the embodiment may have a BET specific surface area of 400 $m^2$/g to 650 $m^2$/g, 420 $m^2$/g to 620 $m^2$/g, 450 $m^2$/g to 600 $m^2$/g, 500 $m^2$/g to 570 $m^2$/g, or 520 $m^2$/g to 550 $m^2$/g.

The BET specific surface area can be measured by adopting the BET method described in JIS Z 8833.

The carbon material of the embodiment has at least two peaks within the range of the diffraction angle of 2θ = 24.0° to 27.0° in a powder X-ray diffraction analysis. Preferably, the carbon material has two peaks.

Of the two peaks, the peak on the low-angle side is derived from multi-layered carbon nanotubes, and the peak mainly on the high-angle side is presumed to be derived from graphite. With the carbon material having such peaks, the dispersibility and conductivity can be excellent. The reason for the excellent dispersibility is considered to be that the amorphous carbon component present in the defective parts of the multi-layered carbon nanotubes is selectively graphitized, making it easier to obtain multi-layered carbon nanotubes with a uniform shape when preparing the dispersion composition. The reason for the excellent conductivity is considered to be that the defective parts of the multi-layered carbon nanotubes are graphitized and the crystallinity is improved, and the conductivity of the multi-layered carbon nanotubes as the main component of the carbon material, and the contact resistance between the multi-layered carbon nanotubes is reduced.

A B/A ratio where A is the peak intensity on the low-angle side and B is the peak intensity on the high-angle side is preferably 1.0 to 2.5, and more preferably less than 1.5. With such carbon material, the dispersibility and conductivity become even more excellent.

In the case where there are two or more peaks, it is preferable that the two peaks with high peak intensities satisfy such requirements.

The carbon material of the embodiment preferably has a lattice plane spacing d002, calculated through the powder X-ray diffraction analysis, of 3.45Å to 3.80Å.

The powder X-ray diffraction analysis can be performed by thoroughly mixing the carbon material and high-purity silicon by using an agate mortar, filling the mixture into a designated sample holder so that the surface is flat, setting the holder in a powder X-ray diffraction analyzer, and performing measurement by varying the irradiation angle of the X-ray source from 5° to 80°. For example, CuKα radiation can be used as the X-ray source.

In the carbon material of the embodiment, sulfur preferably has a content of 500 ppm or less, and more preferably 100 ppm or less. The sulfur content equal to or less than the content is preferable because the decrease in dispersibility can be suppressed.

The carbon material of the embodiment preferably has a purity of 95 mass% or more, more preferably 99 mass% or more, and even more preferably 99.9 mass% or more. In the case where the purity of the carbon material is higher than the above, the storage stability of the secondary battery can be further improved because conductive foreign substances other than the carbon material are fewer. For example, regarding the B/A ratio, the carbon material of the embodiment may have a purity of 95.00 mass% or more, 99.00 mass% or more, 99.90 mass% or more, or 99.99 mass% or more. The carbon purity of the carbon nanotubes can be measured by using an ICP emission spectroscopy analyzer, and specifically, the carbon purity can be determined by using methods described in the examples.

The purity of the carbon material can be determined by subtracting the total weight of iron, cobalt, magnesium, aluminum, copper, nickel, zirconia, and molybdenum contained in the carbon material from the weight of the carbon material. The total content of iron, cobalt, magnesium, aluminum, copper, nickel, zirconia, and molybdenum is preferably 300 ppm or less, and more preferably 100 ppm or less.

The content of the above metals and sulfur can be analyzed by using a multi-type ICP emission spectroscopy analyzer (720-ES, manufactured by Agilent) after drying the carbon material, performing acid decomposition by using a microwave sample pretreatment device (ETHOS1, manufactured by Milestone General), and extracting metals contained in the carbon material.

The G/D ratio (peak ratio between G-band and D-band) of the carbon material in the embodiment is preferably 1.0 to 5.0, and more preferably 1.0 to 4.5, where G is set as the maximum peak intensity in the range of 1560 cm$^{-1}$ to 1600 cm$^{-1}$ and D is set as the maximum peak intensity in the range of 1310 cm$^{-1}$ to 1350 cm$^{-1}$ in the Raman spectrum. The G/D ratio can be measured by using a Raman microscope according to the procedures described in the examples.

In the case where the G/D ratio of the carbon material is within the range, it is considered that the defects of the multi-layered carbon nanotubes are graphitized, the contact resistance between the multi-layered carbon nanotubes becomes smaller, and good conductivity can be easily obtained. In addition, it is presumed that the amount of functional groups on the surface of the multi-layered carbon nanotubes is appropriate, resulting in good affinity with the solvent and improved dispersibility.

The carbon material of the embodiment preferably has an average outer diameter of 4 nm to 25 nm, and more preferably 4 nm to 9 nm. In the case where the average outer diameter is within the range, it is easier to form a good conductive network within the electrode, and during charge and discharge, the active substance inside the secondary battery is uniformly utilized, so the degradation of the active substance is suppressed, and the cycle properties of the secondary battery are improved. For example, the carbon material of the embodiment may have an average outer diameter of 4 nm to 25 nm, 4.5 nm to 20 nm, 5 nm to 15 nm, 5.5 nm to 10 nm, or 6 nm to 7 nm.

The outer diameter and the average outer diameter of the carbon material in the embodiment are determined as follows. First, the carbon material is observed and imaged by using a transmission electron microscope. Next, 300 arbitrary carbon materials are selected in the observed image, and the respective outer diameters thereof are measured. Then, the average outer diameter (nm) of the carbon material is calculated as the number average of the outer diameters.

The volume resistivity of the carbon material in the embodiment is preferably $1.0 \times 10^{-2}$ Ω·cm to $3.0 \times 10^{-2}$ Ω·cm, and more preferably $1.0 \times 10^{-2}$ Ω·cm to $2.0 \times 10^{-2}$ Ω·cm.

The volume resistivity of the carbon material can be measured by using a powder resistivity measurement device (MCP-PD-51 Lorester GP Powder Resistivity Measurement System manufactured by Mitsubishi Chemical Analytech Co., Ltd.). In the case where the volume resistivity of the carbon material is within the range, the conductivity of the electrode film tends to be good, and a secondary battery with excellent rate properties and cycle properties can be easily obtained.

The ash content of the carbon material in the embodiment is preferably 500 ppm or less, and more preferably 300 ppm or less.

<Method for preparing carbon material>

The carbon material of the embodiment can be prepared by any method as long as the carbon material includes multi-layered carbon nanotubes and satisfies the properties of (1) and (2). Carbon materials can generally be prepared by laser ablation, arc discharge, thermal CVD, plasma CVD, and combustion. However, the invention is not limited thereto. For example, the carbon material can be prepared by contacting and reacting a carbon source with a catalyst at 500°C to 1000°C in an atmosphere with an oxygen concentration of 1 volume% or less. The carbon source may be at least one of hydrocarbons and alcohols.

The carbon material of the embodiment is more preferably prepared by further performing a thermal treatment on a carbon material with a G/D ratio of less than 1.0, where G is the maximum peak intensity in the range of 1560 cm$^{-1}$ to 1600 cm$^{-1}$ and D is the maximum peak intensity in the range of 1310 cm$^{-1}$ to 1350 cm$^{-1}$ in the Raman spectrum. The temperature for the thermal treatment is preferably 1000°C to 2000°C, more preferably 1400°C to 1800°C, and even more preferably 1400°C to 1600°C.

The carbon material of the embodiment is preferably prepared by further performing a thermal treatment on the carbon material including iron, cobalt and/or nickel, and more preferably prepared by further performing a thermal treatment on carbon nanotubes containing 1000 ppm to 10000 ppm of iron and/or cobalt. Iron, cobalt, and nickel have the effect of promoting graphitization, and by optimizing the amounts of iron, cobalt, and nickel contained in the carbon nanotubes, graphitization can be performed at a low temperature. Therefore, it is considered that the defective portions of the carbon nanotubes can be selectively graphitized, and the conductivity can be improved without losing the carbon nanotbues' own properties.

<<Carbon material dispersion composition>>

The carbon material dispersion composition includes at least the carbon material of the invention, a dispersant, and a dispersion medium.

In addition, it is preferable that the carbon material dispersion composition includes a fluorine resin. By including the fluorine resin in the carbon material dispersion composition, due to the steric hindrance caused by the fluorine resin, the carbon material is less likely to aggregate, and a carbon material dispersion composition in a good dispersion state can be easily obtained.

Moreover, when a fluorine resin is used as the dispersant, it excels in compatibility with the binder resin during the preparation of the mixture slurry described later, and in the case where a fluorine resin is used as the binder resin, it is preferable from the viewpoint of electrochemical oxidation-reduction resistance. In the specification, in the case where an active substance is included, it is defined as a mixture slurry.

<Dispersant>

The dispersant of the embodiment is not particularly limited as long as it can stabilize the dispersion of the carbon material, and a surfactant, a resin-type dispersant, a fluorine resin, etc., can be used. Surfactants are mainly classified into anionic, cationic, nonionic, and amphoteric surfactants. Depending on the properties required for the dispersion of the carbon material, an appropriate type of dispersant can be used in an appropriate mixture amount.

The content ratio of the dispersant is preferably 1 part by mass to 100 parts by mass, more preferably 10 parts by mass to 100 parts by mass, and even more preferably 20 parts by mass to 50 parts by mass, with respect to 100 parts by mass of the carbon material. In the case where the dispersant amount is within the range, the amount of the dispersant adsorbed on the surface of the carbon material is appropriate, and a carbon material dispersion composition with excellent conductivity and dispersion stability can be easily obtained.

**In** the case where an anionic surfactant is selected, the type thereof is not particularly limited. Specifically, examples may include fatty acid salts, polysulfonic acid salts, polycarboxylic acid salts, alkyl sulfate ester salts, alkylarylsulfonic acid salts, alkylnaphthalenesulfonic acid salts, dialkylsulfonic acid salts, dialkylsulfosuccinic acid salts, alkyl phosphate salts, polyoxyethylene alkyl ether sulfate salts, polyoxyethylene alkylaryl ether sulfate salts, naphthalene sulfonic acid formalin condensates, polyoxyethylene alkyl phosphate sulfonic acid salts, glycerol borate fatty acid esters, and polyoxyethylene glycerol fatty acid esters. However, the invention is not limited thereto. Furthermore, specifically, examples may include sodium dodecylbenzenesulfonate, sodium lauryl sulfate, sodium polyoxyethylene lauryl ether sulfate, polyoxyethylene nonylphenyl ether sulfate ester salt, and sodium salt of β-naphthalene sulfonic acid formalin condensate. However, the invention is not limited therto..

As for cationic surfactants, examples may include alkylamine salts and quaternary ammonium salts. Specifically, examples may include stearylamine acetate, trimethyl coconut ammonium chloride, trimethyl allow ammonium chloride, dimethyl dioleyl ammonium chloride, methyl oleyl diethanol chloride, tetramethylammonium chloride, lauryl pyridinium chloride, lauryl pyridinium bromide, lauryl pyridinium disulfate, cetyl pyridinium bromide, 4-alkylmercaptopyridine, poly(vinylpyridine)-dodecyl bromide, and dodecylbenzyltriethylammonium chloride. However, the invention is not limited thereto. As for amphoteric surfactants, examples may include amino carboxylic acid salts. However, the invention is not limited to these.

As for nonionic surfactants, examples may include polyoxyethylene alkyl ethers, polyoxyalkylene derivatives, polyoxyethylene phenyl ethers, sorbitan fatty acid esters, polyoxyethylene sorbitan fatty acid esters, and alkyl aryl ethers. However, the invention is not limited thereto. Specifically, examples may include polyoxyethylene lauryl ether, sorbitan fatty acid esters, and polyoxyethylene octylphenyl ether. However, the invention is not limited thereto.

The selected surfactant is not limited to a single surfactant. Therefore, it is possible to use a combination of two or more surfactants. For example, a combination of an anionic surfactant and a nonionic surfactant, or a combination of a cationic surfactant and a nonionic surfactant can be used. In such cases, it is preferable that the mixture amount for each surfactant component is set to an appropriate mixture amount. As a combination, a combination of an anionic surfactant and a nonionic surfactant is preferable. It is preferable that the anionic surfactant is a polycarboxylic acid salt. It is preferable that the nonionic surfactant is a polyoxyethylene phenyl ether.

As for specific resin-type dispersants, examples may include cellulose derivatives (cellulose acetate, cellulose acetate butyrate, cellulose butyrate, cyanoethyl cellulose, ethyl hydroxyethyl cellulose, nitrocellulose, methyl cellulose, ethyl cellulose, hydroxyethyl cellulose, hydroxypropyl cellulose, hydroxypropyl methyl cellulose, carboxymethyl cellulose, etc.), polyvinyl alcohol, polyvinyl butyral, polyvinylpyrrolidone, hydrogenated nitrile butadiene rubber, polyacrylonitrile-based polymers, etc. Particularly, methyl cellulose, ethyl cellulose, carboxymethyl cellulose, polyvinyl alcohol, polyvinyl butyral, polyvinylpyrrolidone, hydrogenated nitrile butadiene rubber, and polyacrylonitrile-based polymers are preferable, and polyvinylpyrrolidone, polyvinyl butyral, and hydrogenated nitrile butadiene rubber are more preferable. The molecular weight of the resin-type dispersant is preferably 10,000 to 300,000, and more preferably 10,000 to 150,000.

The fluorine resin is a polymer compound having fluorine atoms in its molecule. Specifically, examples may include polyvinylidene fluoride, polyvinyl fluoride, tetrafluoroethylene.

In the case where a fluorine resin is used as the dispersant, it is more preferable to use in combination with a dispersant other than the fluorine resin, such as a surfactant or a resin-type dispersant. When a surfactant or a resin-type dispersant and a fluorine resin are used as dispersants, the surfactant or the resin-type dispersant is easily adsorbed on the surface of the carbon material, and the wettability and dispersibility are likely to improve.

The weight average molecular weight of the fluorine resin in the embodiment is preferably 10,000 to 2,000,000, more preferably 100,000 to 1,000,000, and particularly preferably 200,000 to 1,000,000.

The content of the fluorine resin in the embodiment is preferably 1 part by mass to 100 parts by mass, preferably 10 parts by mass to 70 parts by mass, based on 100 parts by mass of the carbon material in the carbon material dispersion composition. In the case where the content of the fluorine resin is within the range, a carbon material dispersion composition with good fluidity can be easily obtained.

In addition to the dispersant, it is preferable to add an amine compound or an inorganic base. As the amine compound, primary amines, secondary amines, and tertiary amines can be used, but ammonia and quaternary ammonium compounds are not included. Besides mono-amines, amine compounds such as diamines, triamines, and tetramines having multiple amino groups in the molecule can be used as the amine compound. Specifically, examples may include aliphatic primary amines such as methylamine, ethylamine, butylamine, and octylamine; aliphatic secondary amines such as dimethylamine, diethylamine, and dibutylamine; aliphatic tertiary amines such as trimethylamine, triethylamine, and dimethyloctylamine; amino acids such as alanine, methionine, proline, serine, asparagine, glutamine, lysine, arginine, histidine, aspartic acid, glutamic acid, and cysteine; alkanolamines such as dimethylaminoethanol, monoethanolamine, diethanolamine, methylethanolamine, and triethanolamine; and alicyclic nitrogen-containing heterocyclic compounds such as hexamethylenetetramine, morpholine, and piperidine. However, the invention is not limited thereto. As the inorganic base, examples may include alkali metal hydroxides, alkali earth metal hydroxides, alkali metal carbonates, alkaline earth metal carbonates, alkali metal phosphates, alkaline earth metal phosphates, etc.

The usage amount of the amine compound and the inorganic base is preferably 0.01 parts by mass or more, more preferably 0.1 parts by mass or more, based on 100 parts by mass of the dispersant. The usage amount of the amine compound and the inorganic base is preferably 20 parts by mass or less, more preferably 10 parts by mass or less, and even more preferably 5 parts by mass or less, based on 100 parts by mass of the dispersant.

<Dispersion medium>

The solvent as the dispersion medium in the embodiment is not limited as long as the solvent can disperse the carbon material, but water or an amide-based organic solvent is preferable. Examples of the amide-based organic solvent

7

include N-methyl-2-pyrrolidone (NMP), N-ethyl-2-pyrrolidone (NEP), N,N-dimethylformamide, N,N-dimethylacetamide, N,N-diethylacetamide, and N-methylcaprolactam. In particular, it is more preferable to include at least one selected from the group consisting of N-methyl-2-pyrrolidone and N-ethyl-2-pyrrolidone.

In the case where an amide-based organic solvent is used as the dispersion medium, the water content is preferably 1000 ppm or less, and more preferably 500 ppm or less.

The content ratio of the dispersion medium in the embodiment is preferably 90 mass% to 99 mass%, more preferably 95 mass% to 99 mass%, based on the carbon material dispersion composition (100 mass%). In the case where the content ratio is within the range, a carbon material dispersion composition with fluidity can be easily obtained, and a carbon material dispersion composition with excellent dispersion stability can be easily obtained. By using the carbon material composition with excellent dispersion stability, an electrode film having stable conductivity can be obtained, and the quality of the secondary battery can be easily stabilized.

<Binder resin>

The carbon material dispersion composition of the embodiment can include a binder resin.

The binder resin is a resin used to bind the substances of the carbon material.

There is no particular limitation as the binder resin, but examples may include: polymers or copolymers containing as constituent units, such as fluorine resins, ethylene, propylene, vinyl chloride, vinyl acetate, vinyl alcohol, maleic acid, acrylic acid, acrylic acid ester, methacrylic acid, methacrylic acid ester, acrylonitrile, styrene, vinyl butyral, vinyl acetal, vinylpyrrolidone, etc.; polyurethane resin, polyester resin, phenol resin, epoxy resin, phenoxy resin, urea resin, melamine resin, alkyd resin, acrylic resin, formaldehyde resin, silicone resin, fluorine resin; cellulose resins such as carboxymethyl cellulose; rubber materials such as styrene-butadiene rubber; conductive resins such as polyaniline, polyacetylene, etc.

Among the above, it is preferable to use a fluorine resin as the binder resin from the viewpoint of electrochemical oxidation-reduction resistance.

As the fluorine resin, the same fluorine resin described for the dispersant can be used.

As the fluorine resin of the embodiment, for example, polyvinylidene fluoride, polyvinyl fluoride, and tetrafluoroethylene are preferable.

The weight average molecular weight of the fluorine resin in the embodiment is preferably 10,000 to 2,000,000, more preferably 100,000 to 1,000,000, and particularly preferably 200,000 to 1,000,000.

The content of the binder resin in the embodiment is preferably 1 part by mass to 100 parts by mass, preferably 10 parts by mass to 70 parts by mass, based on 100 parts by mass of the carbon material in the carbon material dispersion composition. In the case where the content of the binder resin is within the range, a carbon material dispersion composition with good fluidity can be easily obtained.

<Method for preparing carbon material dispersion composition>

To obtain the carbon material dispersion composition of the embodiment, it is preferable to perform a process of dispersing the carbon material in the dispersion medium. The dispersion device used to perform such process is not particularly limited.

In addition, after performing the process of dispersing the carbon material and the dispersant in the dispersion medium, it is preferable to mix the binder resin with the obtained dispersion composition and use the mixture after homogenization. As the mixing method, various conventional methods can be performed. As the binder resin, it is preferable to use a fluorine resin.

The carbon material dispersion composition of the embodiment may include single-layered carbon nanotubes other than the carbon material of the invention, in addition to the carbon material of the invention.

At this time, various conventional methods can be adopted to prepare the carbon material dispersion composition.

Specifically, the carbon material dispersion composition may be prepared and used by dispersing a mixture liquid containing the carbon material of the invention, single-layered carbon nanotubes, a dispersant, a dispersion medium, and optional components as needed, or a carbon material dispersion composition (I) containing the carbon material of the invention and a carbon material dispersion composition (II) containing single-layered carbon nanotubes (excluding the case where it is the carbon material dispersion composition (I)) may be prepared and then used, respectively.

Among these, it is preferable from the viewpoint of stability and battery properties that the carbon material dispersion composition (I) includes the carbon material, the dispersant, and the dispersion medium, and the carbon material dispersion composition (II) is a carbon material dispersion composition including single-layered carbon nanotubes and a fluorine resin.

The order of mixing the carbon material of the invention, the single-layered carbon nanotubes, the dispersant, and the dispersion medium is not particularly limited. The components may be added sequentially or two or more of the components may be added simultaneously.

Among the methods, a preparation method (I): a method including (I-1) below, or a preparation method (II): a method including (II-1) to (II-3) below is preferable from the viewpoint of suppressing the aggregation of the carbon material and the gelation of the fluorine resin, and the preparation method (II): a method including steps of (II-1) to (II-3) below is more preferable.

- Preparation method (I)
  (I-1) A step of dispersing a mixture liquid containing the carbon material of the invention, single-layered carbon nanotubes, a fluorine resin, and a dispersion medium.
- Preparation method (II)

    (III-1) A step of dispersing a mixture liquid containing the carbon material of the invention, the dispersant, and a dispersion medium to prepare a carbon material dispersion composition (I).
    (II-2) A step of dispersing a mixture liquid containing the single-layered carbon nanotubes, the fluorine resin, and the dispersion medium to prepare the carbon material dispersion composition (II).
    (II-3) A step of mixing the carbon material dispersion composition (I) and the carbon material dispersion composition (II).

As the dispersion device, a disperser normally used for pigment dispersion and the like can be used. Examples may include: mixer types such as dispersers, homomixers, planetary mixers, etc.; homogenizer types (such as BRANSON's Advanced Digital Sonifer (registered trademark), MODEL 450DA, M-Technique's "Clearmix", PRIMIX's "Filmix", Silverson's "Abramix", etc. ); paint conditioners (manufactured by Red Devil); colloid mill types (such as PUC's "PUC Colloid Mill", IKA's "Colloid Mill MK"); cone mills (such as "Cone Mill MKO" manufactured by IKA); ball mills; sand mills (such as "Dyno-mill" manufactured by Shinmaru Enterprises); attritors; pearl mills (such as "DCP Mill" of Eirich); media-type dispersers such as Coball mills; high-pressure homogenizers (such as "Genus PY" manufactured by Genus, "Star Burst" manufactured by Sugino Machine, "Nanomizer" manufactured by Nanomizer Co., Ltd.); media-less dispersers such as "Clear SS-5" manufactured by M Technique Co., Ltd. and "MICROS" manufactured by NARA MACHINERY CO., LTD; and other devices such as roll mills However, the invention is not limited thereto.

In the embodiment, the carbon material dispersion composition preferably has a water content of 100 ppm to 1500 ppm, and preferably 200 ppm to 1000 ppm. In the case where the water content of the carbon material dispersion composition is within the range, the gelation of the mixture slurry described later is suppressed, and a mixture slurry and an electrode film with stable quality can be easily obtained.

In the embodiment, the amount of the dispersant in the carbon material dispersion composition is preferably 10 parts by mass to 100 parts by mass, and more preferably 20 parts by mass to 50 parts by mass, with respect to 100 parts by mass of the carbon material. In the case where the dispersant amount in the carbon material dispersion composition is within the range, the amount of the dispersant adsorbed on the surface of the carbon material is appropriate, and a carbon material dispersion composition with excellent conductivity and dispersion stability can be easily obtained.

In this embodiment, the content ratio of the carbon material in the carbon material dispersion composition is preferably 0.5 mass% to 5.0 mass%, more preferably 1.0 mass% to 3.5 mass%, and even more preferably 1.5 mass% to 3.0 mass%, based on 100 mass% of the carbon material dispersion composition. In the case where the amount of the carbon material in the carbon material dispersion composition is within the range, at the time of preparing the carbon material dispersion composition, the multi-layered carbon nanotubes are appropriately dispersed, and a carbon material dispersion composition with excellent conductivity and dispersion stability can be easily obtained.

In the embodiment, regarding the initial viscosity of the carbon material dispersion composition, the viscosity measured at 6 rpm by using a B-type viscometer is preferably 100 mPa·s or more and less than 10,000 mPa·s, and more preferably 500 mPa·s or more and less than 5,000 mPa·s. In the case where the initial viscosity of the carbon material dispersion composition is within the range, it is considered that the dispersion state of the multi-layered carbon nanotubes included in the carbon material composition is appropriate, and a conductive network can be easily formed.

The liquid properties of the carbon material dispersion composition can be determined by evaluating the thixotropy (TI value) of the carbon material composition as follows. After placing the carbon material composition in a constant temperature bath at 25°C for 24 hours, the viscosity is measured by using a B-type viscometer rotor at the rotation speed of 6 rpm, and then at 60 rpm. When the viscosity measured at 6 rpm is set as S, and the viscosity measured at 60 rpm is set as T, the S/T ratio becomes the TI value. The TI value of the carbon material composition is preferably 2 or more and less than 7, and more preferably 3 or more and 5 or less. In the case where the TI value is within the range, the aspect ratio of the multi-layered carbon nanotubes included in the carbon material composition is appropriate, and a carbon material composition with excellent conductivity and stability over time can be easily obtained.

In the embodiment, the viscosity of the carbon material dispersion composition after being stored for one week under the condition of 60°C following the preparation of the carbon material dispersion composition is preferably 500 mPa·s to 20,000 mPa·s, and more preferably 2,000 mPa·s to 10,000 mPa·s, when measured at 25°C and a rotor rotation speed of 6 rpm by using the B-type viscometer after being cooled to 25°C.

The carbon material dispersion composition with the viscosity within the range is considered to have appropriate composition ratios of the carbon material, the dispersant, and the dispersion medium, as well as an appropriate dispersion process, and the dispersion stability is favorable. The adsorption reaction of the dispersant included in the carbon material dispersion composition onto the carbon material surface is an endothermic reaction. Therefore, by evaluating the viscosity of the carbon material dispersion composition after storage under a high-temperature condition, it is possible to determine a necessary and sufficient amount of the dispersant to obtain a carbon material dispersion composition with excellent dispersion stability.

<<Mixture slurry>>

The mixture slurry of the embodiment includes the carbon material dispersion composition and the active substance. In other words, the mixture slurry includes at least the carbon material of the invention, the dispersant, the dispersion medium, and the active substance, and preferably includes a fluorine resin as the dispersant or binder resin.

<active substance>

The active substance in the embodiment refers to the material that serves as the basis for the battery reaction. The active substance can be divided into a positive electrode active substance and a negative electrode active substances based on the electromotive force.

In the specification, the positive electrode active substance and the negative electrode active substance may be simply referred to as "active substance". The active substance is a material that serves as the basis for the battery reaction. The active substance can be divided into a positive electrode active substance and a negative electrode active substance based on the electromotive force.

As for the positive electrode active substance, although not particularly limited, metal compounds such as metal oxides and metal sulfides capable of doping or intercalating lithium ions, and conductive polymers can be used. Examples may include inorganic compounds such as oxides of transition metals like Fe, Co, Ni, Mn, composite oxides with lithium, and transition metal sulfides. Specifically, examples may include transition metal oxide powders such as $MnO$, $V_2O_5$, $V_6O_{13}$, $TiO_2$, composite oxide powders of lithium and transition metals in a layered structure such as lithium nickelate, lithium cobaltate, lithium manganate, lithium and transition metals in a spinel structure such as lithium manganate, lithium iron phosphate materials which are phosphate compounds in an olivine structure, transition metal sulfide powders such as $TiS_2$, $FeS$. In addition, conductive polymers such as polyaniline, polyacetylene, polypyrrole, and polythiophene can also be used. Furthermore, a mixture of the inorganic compounds and organic compounds may be used.

As for the negative electrode active substance, there is no particular limitation as long as the material is capable of doping or intercalating lithium ions. Examples may include metal Li, alloys such as tin alloys, silicon alloys, lead alloys, metal oxides such as $LiXFe_2O_3$, $LiXFe_3O_4$, $LiXWO_2$ (where x is a number satisfying $0<x<1$), lithium titanate, lithium vanadate, lithium silicate, conductive polymers such as polyacetylene, poly-p-phenylene, carbon-based materials such as amorphous carbon materials like soft carbon and hard carbon, artificial graphite such as highly graphitized carbon materials, or natural graphite and other carbonaceous powders, carbon black, mesophase carbon black, resin-baked carbon materials, vapor-grown carbon fibers, and carbon fibers. The negative electrode active substances can be used alone or in combination of two or more.

The positive electrode active substance is preferably a composite oxide with lithium, including transition metals such as Al, Fe, Co, Ni, Mn, more preferably a composite oxide with lithium, including any of Al, Co, Ni, Mn, and particularly preferably a composite oxide with lithium including Ni and/or Mn. When such active substances are used, a particularly favorable effect can be obtained.

The BET specific surface area of the active substance is preferably 0.1 $m^2/g$ to 10 $m^2/g$, more preferably 0.2 $m^2/g$ to 5 $m^2/g$, and even more preferably 0.3 $m^2/g$ to 3 $m^2/g$.

The average particle diameter of the active substance is preferably in the range of 0.05 $\mu m$ to 100 $\mu m$, and more preferably in the range of 0.1 $\mu m$ to 50 $\mu m$. The average particle diameter of the active substance referred to in the specification is the average of the particle diameters measured by electron microscopy.

<Manufacturing method of mixture slurry>

To obtain the mixture slurry of the embodiment, it is preferable to perform a dispersion process after adding the active substance to the carbon material dispersion composition. The dispersion device used to perform such process is not particularly limited. The mixture slurry can be obtained by using the dispersion device described for the carbon material dispersion composition.

The content ratio of the active substance in the mixture slurry is preferably 20 mass% to 85 mass%, and particularly preferably 40 mass% to 85 mass%, based on 100 mass% of the mixture slurry.

The content ratio of the carbon material in the mixture slurry is preferably 0.05 mass% to 10 mass%, preferably 0.1 mass% to 5 mass%, and preferably 0.1 mass% to 3 mass%, based on 100 mass% of the active substance.

The content ratio of the fluorine resin in the mixture slurry is preferably 0.5 mass% to 20 mass%, more preferably 1 mass% to 10 mass%, and particularly preferably 1 mass% to 5 mass%, based on 100 mass% of the active substance.

The solid content concentration of the mixture slurry is preferably 30 mass% to 90 mass%, and preferably 40 mass% to 85 mass%, based on 100 mass% of the mixture slurry.

The water content in the mixture slurry is preferably 500 ppm or less, more preferably 300 ppm or less, and particularly preferably 100 ppm or less.

<<Electrode>>

The electrode film of the embodiment includes a current collector and an electrode film formed from the mixture slurry. The electrode film is a coating film of the mixture slurry. For example, it is a coating film forming an electrode mixture layer by coating and drying the mixture slurry on the current collector.

The material and the shape of the current collector used in the electrode film of the embodiment are not particularly limited, and can be appropriately selected to suit various types of secondary batteries. For example, the materials for the current collector include metals or alloys such as aluminum, copper, nickel, titanium, or stainless steel. As for the shape, although a foil on a flat plate is generally used, a material with a roughened surface, a a material with a perforated foil, or a mesh-type current collector can also be used.

There is no particular restriction on the method for coating the mixture slurry on the current collector and forming the electrode film, and conventional methods can be used. Specifically, examples can include methods such as die coating, dip coating, roll coating, doctor coating, knife coating, spray coating, gravure coating, screen printing, or electrostatic coating. As for the drying method, natural drying, forced air drying, hot air drying, infrared heating, far-infrared heating, and others can be used. However, the invention is not limited thereto.

In addition, after coating, a rolling process using a flat press or a calendar roll may be performed. The thickness of the electrode mixture layer is generally 1 $\mu$m or more and 500 $\mu$m or less, and preferably 10 $\mu$m or more and 300 $\mu$m or less.

<<Secondary battery>>

The secondary battery of the embodiment includes an electrode having the electrode film of the invention and an electrolyte.

The carbon material of the invention excels in rate properties by forming a good conductive network within the secondary battery electrode, and, since the active substance is utilized uniformly during charge and discharge, degradation of the active substance is less likely to progress. Furthermore, overcharging and over-discharging during charge and discharge are suppressed. As a result, degradation of battery properties due to electrolyte decomposition or metal deposition is less likely to occur, and cycle properties are excellent.

As the positive electrode, an electrode film prepared by coating and drying the mixture slurry containing the positive electrode active substance on the current collector can be used.

As the negative electrode, an electrode film prepared by coating and drying the mixture slurry containing the negative electrode active substance on the current collector can be used.

As the electrolyte, various conventional materials that allow ion movement can be used. For instance, examples may include those containing lithium salts such as $LiBF_4$, $LiClO_4$, $LiPF_6$, $LiAsF_6$, $LiSbF_6$, $LiCF_3SO_3$, $Li(CF_3SO_2)_2N$, $LiC_4F_9SO_3$, $Li(CF_3SO_2)_3C$, LiI, LiBr, LiCl, LiAlCl, $LiHF_2$, LiSCN, or $LiBPh_4$ (where Ph is a phenyl group), but the invention is not limited thereto. Those containing sodium salts can also be used. It is preferable to use the electrolyte dissolved in a non-aqueous solvent as an electrolyte solution.

As the non-aqueous solvent, although not particularly limited, examples may include: carbonates such as ethylene carbonate, propylene carbonate, butylene carbonate, dimethyl carbonate, ethyl methyl carbonate, and diethyl carbonate; lactones such as $\gamma$-butyrolactone, $\gamma$-valerolactone, and $\gamma$-octanoic lactone; glymes such as tetrahydrofuran, 2-methyltetrahydrofuran, 1,3-dioxolane, 4-methyl-1,3-dioxolane, 1,2-methoxyethane, 1,2-ethoxyethane, and 1,2-dibutoxyethane; esters such as methyl formate, methyl acetate, and methyl propionate; sulfoxides such as dimethyl sulfoxide and sulfolane; and nitriles such as acetonitrile. Such solvents may be used alone or in a mixture of two or more types.

In the secondary battery of the embodiment, it is preferable to include a separator. As the separator, examples may include polyethylene nonwoven fabric, polypropylene nonwoven fabric, polyamide nonwoven fabric, and those subjected to a hydrophilic process. However, the invention is not limited thereto.

The structure of the secondary battery of the embodiment is not particularly limited, but the battery is typically formed by a positive electrode and a negative electrode, and a separator provided as necessary, and can be formed in various shapes such as a paper type, a cylindrical type, a button type, a laminate type, etc., depending on the purpose of use.

The applications of the secondary battery of the embodiment are not particularly limited. Specifically, it can be used for power sources of consumer devices such as mobile phones, laptop computers, digital cameras, etc.; emergency power sources for hospitals, factories, buildings, etc.; vehicles such as hybrid vehicles, plug-in hybrid vehicles, electric vehicles, power-assisted bicycles, railway vehicles, etc. The secondary battery is, for example, one that recovers regenerative energy from the power of a vehicle.

Among these, since it is a secondary battery with high charge-discharge performance and excellent cycle properties, it can be suitably used for vehicles, resulting in vehicles with high safety and expected improved fuel efficiency. Furthermore, it can demonstrate excellent effects even in vehicle applications where high-current charge and discharge are desired.

The mounting position of the secondary battery in the vehicle of the embodiment is not particularly limited. For example, in the case of mounting the secondary battery in an automobile, the secondary battery can be mounted in the engine room of the vehicle, at the rear of the vehicle body, or under the seats of the vehicle body.

Examples

The invention will be described more specifically below with reference to examples. The invention is not limited to the following examples as long as the invention does not exceed the gist thereof. Unless otherwise specified, "parts" refers to "parts by mass" and "%" refers to "mass%". In addition, the mixture amounts in the tables are in parts by mass, and except for solvents, the amounts are values converted from non-volatile contents. Blank spaces in the tables indicate that the component is not included in the mixture.

The materials used in the examples and comparative examples are shown below.

<Dispersant>

- Polyvinylpyrrolidone (manufactured by Nippon Shokubai Co., Ltd., K-30, weight average molecular weight 40,000) hereinafter referred to as Dispersant (A).
- Polyvinyl butyral resin (manufactured by Sekisui Chemical Co., Ltd., BL-10, weight average molecular weight 15,000) hereinafter referred to as Dispersant (B).
- Hydrogenated nitrile butadiene rubber (dispersant 6 prepared according to Japanese Patent No. 6933285) hereinafter referred to as Dispersant (C).

<Measurement of weight average molecular weight (Mw) of dispersants>

The weight average molecular weights (Mw) of the dispersants were measured by using gel permeation chromatography (GPC) equipped with an RI detector. An HLC-8320GPC (manufactured by Tosoh Corporation) was used as the device, with three separation columns connected in series. The filling agents used were "TSK-GEL SUPER AW-4000", "AW-3000", and "AW-2500" manufactured by Tosoh Corporation, in this order, and the measurement was performed at an oven temperature of 40°C, by using a N,N-dimethylformamide solution containing 30 mM triethylamine and 10 mM LiBr as the eluent, with a flow rate of 0.6 mL/min. The measurement sample was adjusted to a concentration of 1% by using a solvent consisting of the eluent, and 20 microliters were injected. The weight average molecular weight is a polystyrene-equivalent value.

<Preparation of standard negative electrode>

0.5 parts by mass of acetylene black (DENKA BLACK (registered trademark), HS-100, manufactured by Denka), 1 part by mass of MAC500LC (sodium carboxymethyl cellulose, Sunrose special type MAC500L, manufactured by Nippon Paper Industries Co., Ltd., non-volatile content 100%), and 98.4 parts by mass of water were added to a plastic container of 150 mL. Then, the mixture was stirred for 30 seconds at 2000 rpm by using a rotation/revolution mixer (THINKY MIXER, ARE-310, manufactured by THINKY Corporation). Furthermore, 92 parts by mass of artificial graphite (manufactured by Nippon Graphite Industries, Ltd., CGB-20) and 5 parts by mass of silicon (manufactured by Osaka Titanium Technologies Co., Ltd., SILICON MONOOXIDE SiO 1.3C 5µm, non-volatile content 100%) were added as active substances, and the mixture was stirred for 10 minutes at 3000 rpm by using a high-speed stirrer. Subsequently, 3.1 parts by mass of SBR (TRD2001, manufactured by JSR Corporation) were added, and the mixture was stirred for 30 seconds at 2000 rpm by using the rotation/revolution mixer to obtain a mixture slurry for the negative electrode. Afterwards, the mixture slurry for the negative electrode was coated onto a copper foil by using an applicator to achieve a weight per unit area of 8 mg/cm$^2$ for the electrode. The coated film was then dried in an electric oven at 120°C $\pm$ 5°C for 25 minutes. Furthermore, the coated film was subjected to a rolling process using a roll press (3t hydraulic roll press, manufactured by Sankumetal Co., Ltd.) to prepare a standard negative electrode with a mixture layer having a density of 1.6 g/cm$^3$.

<Physical property measurement and evaluation method>

The physical property measurement and the evaluation method for the carbon material, the carbon material dispersion composition, the electrode film, and the secondary battery used in the following examples and comparative examples are as follows.

<BET specific surface area of carbon material>

0.03 g of the carbon material was weighed by using an electronic balance (MSA225S100DI, manufactured by Sartorius). The sample was then dried while degassing at 110°C for 15 minutes. Subsequently, the BET specific surface area of the carbon material was measured by using a fully automatic specific surface area measurement device (HM-model1208, manufactured by MOUNTECH).

<Degree of graphitization of carbon materials (B/A ratio)>

The carbon material was placed in the recessed part of a glass sample plate (outer diameter: 5.0 cm $\times$ 3.5 cm, thickness: 3 mm, sample part: 2.0 cm $\times$ 2.0 cm, thickness: 2 mm) and planarized by using a slide glass. Subsequently, the powder X-ray diffraction analysis sample of the carbon material was set in a fully automatic multipurpose X-ray diffraction device (SmartLab, manufactured by Rigaku), operated from 15° to 35°, and an analysis was performed. Sampling was conducted every 0.01°, and the scan speed was set to 1°/min. The voltage was 40 kV, the current was 40 mA, and the X-ray source was CuK$\alpha$ radiation. Regarding the intensity ratio of the two peaks observed at the diffraction angle $2\theta$ = 15° to 35° obtained at this time, the plots appearing at diffraction angles $2\theta$ = 15° to 35° were each subjected to 11-point simple moving average, and, within the range of diffraction angle $2\theta$ = 20° to 30°, the intensity ratio was calculated as follows by setting the peak intensity on the low-angle side as A and the peak intensity on the high-angle side as B. The baseline was set as a line connecting the plots of $2\theta$ = 16° and $2\theta$ = 34°. The degree of graphitization of the carbon material was calculated by using Formula 1 as follows:

$$\text{(Formula 1) Degree of graphitization of carbon material} = \text{B/A}$$

The degree of graphitization of the carbon material (B/A ratio) was evaluated according to the following criteria:

   $\alpha$: 1.0 or more and less than 1.5
   $\beta$: 1.5 or more and 2.5 or less
   $\gamma$: exceeding 2.5
   $\delta$: less than 1.0
   -: there was only one peak

<Carbon purity of carbon material>

The carbon material was acid-decomposed by using a microwave sample pretreatment device (ETHOS 1, manufactured by Milestone General) to extract metals contained in the carbon material. Subsequently, an analysis was performed by using a multi-type ICP emission spectroscopy apparatus (720-ES, manufactured by Agilent) to calculate the amount of metals (total amount of iron, cobalt, magnesium, aluminum, copper, nickel, zirconia, and molybdenum) contained in the extraction liquid. The carbon purity (mass%) of the carbon material was calculated as follows.

Carbon purity of carbon material (mass%) = ((Mass of carbon material - Amount of metals) $\div$ Mass of carbon material) $\times$ 100

<G/D ratio of carbon material>

The carbon material was placed in a Raman microscope (XploRA, manufactured by HORIBA, Ltd.) and measured using a laser wavelength of 532 nm. The measurement conditions were set as follows: acquisition time of 60 seconds, accumulation count of 2 times, attenuation filter of 10%, objective lens magnification of 20 times, confocal hole of 500, slit width of 100 $\mu$m, and measurement wavelength of 100 cm$^{-1}$ to 3000 cm$^{-1}$. The carbon material for measurement was dispensed onto a slide glass and planarized by using a spatula. Among the obtained peaks, the maximum peak intensity within the range of 1560 cm$^{-1}$ to 1600 cm$^{-1}$ in the spectrum was designated as G, and the maximum peak intensity within the range of 1310 cm$^{-1}$ to 1350 cm$^{-1}$ was designated as D. The ratio of G/D was defined as the G/D ratio of the carbon materials.

<Average outer diameter of carbon material>

Using an electronic balance (MSA225S100DI, manufactured by Sartorius), and 0.2 g of the carbon material were measured in a 450 mL SM sample bottle (manufactured by Sansho Co., Ltd.), 200 mL of toluene was added, and the mixture was dispersed by using an ultrasonic homogenizer (Advanced Digital Sonifer(R), MODEL 450DA, manufactured by BRANSON) at 30% amplitude for 5 minutes under ice cooling to adjust a carbon material dispersion composition. Subsequently, the carbon material dispersion composition was appropriately diluted, and a few $\mu$L were dropped onto a collodion membrane and dried at room temperature. The sample was then observed using a transmission electron microscope (H-7650, manufactured by Hitachi, Ltd.). The observation was performed at a magnification of 50,000 times, and multiple photographs containing more than 10 multi-layered CNTs in the field of view were taken. The outer diameters of 300 randomly selected multi-layered CNTs were measured, and the average thereof was defined as the average outer diameter (nm) of the carbon material.

<Volume resistivity of carbon material>

The volume resistivity [$\Omega\cdot$cm] of the carbon material under various pressures was measured by using a powder resistivity measurement device (Loresta GP Powder Resistivity Measurement System MCP-PD-51, manufactured by Mitsubishi Chemical Analytech Co., Ltd.) with a sample mass being set at 1.2 g, a powder probe unit (four-probe ring electrode, electrode spacing of 5.0 mm, electrode radius of 1.0 mm, sample radius of 12.5 mm) being used, and the applied voltage limiter being set at 90 V. The value of the volume resistivity of the carbon material at the density of 1 g/cm$^3$ was calculated.

The evaluation of the conductivity of the carbon material was as follows: $1.0 \times 10^{-2}$ $\Omega\cdot$cm or more and less than $2.0 \times 10^{-2}$ $\Omega\cdot$cm: ++ (excellent), $2.0 \times 10^{-2}$ $\Omega\cdot$cm or more and less than $3.0 \times 10^{-2}$ $\Omega\cdot$cm: + (good), $3.0 \times 10^{-2}$ $\Omega\cdot$cm or more: - (poor).

<Initial viscosity of carbon material dispersion composition>

After placing the carbon material dispersion composition in a constant temperature bath at 25°C for 1 hour or more, the carbon material dispersion composition was immediately measured by using a B-type viscometer at a rotor rotation speed of 6 rpm. For the measurement, a No. 3 rotor was used. In the case where the initial viscosity was less than 200 mPa·s, a No. 2 rotor was used.

The evaluation criteria for initial viscosity were as follows: 500 mPa·s or more and less than 5,000 mPa·s: ++ (excellent), 100 mPa·s or more and less than 500 mPa·s or 5,000 mPa·s or more and less than 10,000 mPa·s: + (good), less than 100 mPa·s or 10,000 mPa·s or more: - (poor)

<Thixotropy (TI value) of carbon material dispersion composition>

After placing the carbon material dispersion composition in a constant temperature bath at 25°C for 24 hours, the carbon material dispersion composition was thoroughly stirred and then immediately measured by using a B-type viscometer at a rotor rotation speed of 6 rpm. Subsequently, the measurement was immediately performed using a B-type viscometer at a rotor rotation speed of 60 rpm. When the viscosity measured at 6 rpm was set as S and the viscosity measured at 60 rpm was set as T, the TI value was set as S/T.

The evaluation criteria for the TI value were as follows: 3 or more and less than 5: ++ (excellent), 2 or more and less than 3, or 5 or more and less than 7: + (good), less than 2 or 7 or more: - (poor).

<Stability of carbon material dispersion composition over time>

After being placed in a constant temperature bath at 60°C for 7 days, the CNT dispersion composition was transferred to a constant temperature bath at 25°C and left until the CNT dispersion composition reached 25°C. Subsequently, the measurement was performed using a B-type viscometer at a rotor rotation speed of 6 rpm. For the measurement, a No. 3 rotor was used.

The evaluation criteria for stability over time were as follows: 2,000 mPa·s or more and 10,000 mPa·s or less: ++ (excellent), 500 mPa·s or more and less than 2,000 mPa·s, or more than 10,000 mPa·s and less than 20,000 mPa·s: + (good), less than 500 mPa·s or exceeding 20,000 mPa·s: - (poor).

<Volume resistivity of electrode film>

The mixture slurry was coated onto an aluminum foil by using an applicator to achieve a weight per unit area of 20 mg/cm$^2$ for the electrode. The coated film was then dried in an electric oven at 120°C $\pm$ 5°C for 25 minutes. Subsequently, the surface resistivity (Q/o) of the dried coated film was measured by using a Loresta GP, MCP-T610 manufactured by Mitsubishi Chemical Analytech Co., Ltd. After measurement, the volume resistivity ($\Omega$·cm) of the electrode film was determined by multiplying the measured value by the thickness of the electrode mixture layer formed on the aluminum foil. The thickness of the electrode mixture layer was calculated by measuring the average of three points in the electrode film by using a film thickness meter (DIGIMICRO MH-15M, manufactured by NIKON), subtracting the thickness of the aluminum foil from the average, and then setting the obtained value as the volume resistivity ($\Omega$·cm) of the electrode film.

The evaluation criteria for the volume resistivity were as follows: less than 4 $\Omega$·cm: ++ (excellent), 4 $\Omega$·cm or more and less than 8 $\Omega$·cm: + (good), 8 $\Omega$·cm or more: - (poor).

<Peel strength of electrode film>

The mixture slurry was coated onto an aluminum foil by using an applicator to achieve a weight per unit area of 20 mg/cm$^2$ for the electrode. The coated film was then dried in an electric oven at 120°C $\pm$ 5°C for 25 minutes. Subsequently, two rectangular shapes of 90 mm $\times$ 20 mm were cut by using the coating direction as the long axis. The peel strength was measured by using a tabletop tensile tester (Strograph E3, manufactured by Toyo Seiki Seisaku-sho, Ltd.) and evaluated by the 180-degree peel test method. Specifically, a double-sided tape (No. 5000NS, manufactured by Nitoms Inc.) in a size of 100 mm $\times$ 30 mm was attached to a stainless steel plate, and the prepared battery electrode mixture layer was adhered to the other side of the double-sided tape. The electrode was then peeled off from the bottom to the top at a constant speed (50 mm/min), and the average value of the stress at this time was taken as the peel strength. The evaluation criteria for peel strength were as follows: 0.7 N/cm or more: ++ (excellent), 0.5 N/cm or more and less than 0.7 N/cm: + (good), less than 0.5 N/cm: - (poor).

<Evaluation on rate properties of lithium-ion secondary battery>

The laminate-type lithium-ion secondary battery was placed in a constant temperature room at 25°C, and charge-discharge measurements were performed by using a charge-discharge device (SM-8, manufactured by Hokuto Denko Corporation). After performing constant current constant voltage charging (cut-off current: 1.0 mA (0.02C)) with a charging current of 10 mA (0.2C) at a charge cut-off voltage of 4.2 V, constant-current discharging was performed with a discharge current of 10 mA (0.2C) at a discharge cut-off voltage of 2.5 V. The operation was repeated 3 times, and then constant-current constant-voltage charging (cut-off current (1.0 mA, 0.02C)) was performed with a charging current of 10 mA (0.2C) at a charge cut-off voltage of 4.2 V. Constant-current discharging was then performed with discharge currents of 0.2C and 3C until the discharge cut-off voltage of 2.5 V was reached, and the respective discharge capacities were determined. The rate properties can be expressed by the ratio between the discharge capacity of 0.2C and the discharge capacity of 3C, as shown in Formula 2 as follows.

Rate properties = (discharge capacity of 3C / discharge capacity of 0.2C for the third time) $\times$ 100 (%)     (Formula 2)

The evaluation of rate properties was as follows: +++ (excellent) for a rate property of 80% or more, ++ (good) for a rate property of 70% or more and less than 80%, + (acceptable) for for a rate property of 60% or more and less than 70%, and - (poor) for a rate property of less than 60%. For cycle properties, the evaluation was as follows: +++ (excellent) for a cycle property of 90% or more, ++ (good) for a cycle property of 85% or more and less than 90%, + (acceptable) for a cycle property of 80% or more and less than 85%, and - (poor) for a cycle property of less than 80%.

<Evaluation on cycle properties of lithium-ion secondary battery>

The laminate-type lithium-ion secondary battery was placed in a constant temperature room at 25°C, and charge-discharge measurements were performed by using a charge-discharge device (SM-8, manufactured by Hokuto Denko Corporation). After performing constant-current constant-voltage charging (cut-off current: 1.25 mA (0.025C)) with a charging current of 50 mA (1C) at a charge cut-off voltage of 4.2 V, constant-current discharging was performed with a discharge current of 50 mA (1C) at a discharge cut-off voltage of 2.5 V. The operation was repeated 200 times. 1C was defined as the current value that discharges the theoretical capacity of the positive electrode in 1 hour. The cycle properties can be expressed by the ratio between the discharge capacity of 1C at the 3rd cycle and the discharge capacity of 1C at the 200th cycle at 25°C, as shown in Formula 3 as follows.

Cycle properties = (discharge capacity of 1C at the 3rd cycle / discharge capacity of 1C at the 200th cycle) $\times$ 100 (%)　　　　　　(Formula 3)

For cycle properties, the evaluation criteria were as follows: +++ (excellent) for a cycle property of 90% or more, ++ (good) for a cycle property of 85% or more and less than 90%, + (acceptable) for a cycle property of 80% or more and less than 85%, and - (poor) for a cycle property of less than 80%.

(Example 1-1)

10 kg of the carbon material (multi-layered CNT, manufactured by JEIO Co., Ltd., JENOTUBE6A) was weighed into a 120 L heat-resistant container, and the heat-resistant container containing the carbon material was placed in a furnace. Subsequently, a nitrogen gas was introduced into the furnace, and the air inside the furnace was discharged while a positive pressure is maintained. After the oxygen concentration in the furnace became 0.1% or less, the temperature was raised to 1400°C in 30 hours. While the furnace temperature was maintained at 1400°C, a chlorine gas was introduced at a rate of 50 L/min for 100 hours. Thereafter, a nitrogen gas was introduced at 50 L/min, and cooling was performed while the positive pressure is maintained to obtain the carbon material (A) including multi-layered carbon nanotubes.

(Examples 1-2 to 1-4), (Comparative Examples 1-1 to 1-2)

Carbon materials (B) to (F) including multi-layered carbon nanotubes were obtained by the same method as in Example 1-1, except that the furnace temperature was changed to the temperatures described in Table 1.

(Comparative Examples 1-3 to 1-5)

A carbon material (G) was a carbon material (multi-layered CNT, KUMHO PETROCHEMICAL Co., Ltd., 100T); a carbon material (H) was a carbon material (multi-layered CNT, Nanocyl Co., Ltd., NC7000); and a carbon material (I) was a carbon material (multi-layered CNT, JEIO Co., Ltd., JENOTUBE6A). The carbon material (G) contained 3000 ppm of iron and 1500 ppm of cobalt, the carbon material (H) contained 11000 ppm of iron and 3000 ppm of cobalt, and the carbon material (I) contained 4000 ppm of iron and 2000 ppm of cobalt.

(Comparative Examples 1-6 to 1-9)

Purified CNT (C) of Japanese Patent No. 6586197 was used as a carbon material (J), CNT (F) of Japanese Patent No. 6590034 was used as a carbon material (K), CNT (G) of Japanese Patent No. 6590034 was used as a carbon material (L), and CNT (D) of Japanese Patent No. 6801806 was used as a carbon material (M).

(Comparative Example 1-10)

CNT (N) was obtained by the same method as in Example 1-1, except that the carbon material (CNT manufactured by JEIO Co., Ltd., JENOTUBE6A) was changed to CNT (manufactured by Nanocyl Co., Ltd., NC7000).
Table 1 shows the evaluation results of CNTs prepared in Examples 1-1 to 1-4 and Comparative Examples 1-1 to 1-10. All of the carbon materials in the Examples exhibited two peaks within the diffraction angle range of 2θ=24.0° to 27.0°, while Comparative Examples 1-3 to 1-5, 1-7, and 1-9 exhibited only one peak.

[Table 1]

| Carbon material | | Furnace temperature (°C) | BET specific surface area (m²/g) | B/A ratio | Carbon material purity (%) | G/D ratio | Outer diameter (nm) | Conductivity | |
| | | | | | | | | Volume resistivity ($\times 10^{-2}$ $\Omega \cdot$cm) | Evaluation |
|---|---|---|---|---|---|---|---|---|---|
| Example 1-1 | A | 1400 | 600 | β | 99.99 | 1.3 | 6.0 | 1.5 | ++ |

(continued)

| Carbon material | | Furnace temperature (°C) | BET specific surface area (m$^2$/g) | B/A ratio | Carbon material purity (%) | G/D ratio | Outer diameter (nm) | Conductivity | |
|---|---|---|---|---|---|---|---|---|---|
| | | | | | | | | Volume resistivity ($\times 10^{-2}$ $\Omega \cdot$cm) | Evaluation |
| Example 1-2 | B | 1500 | 570 | $\alpha$ | 99.99 | 2.2 | 6.0 | 1.7 | ++ |
| Example 1-3 | c | 1600 | 520 | $\alpha$ | 99.99 | 3.1 | 6.2 | 2.2 | + |
| Example 1-4 | D | 1700 | 450 | $\beta$ | 99.99 | 4.5 | 6.5 | 2.8 | + |
| Comparative Example 1-1 | E | 2000 | 280 | $\gamma$ | 99.99 | 5.1 | 8.0 | 3.2 | - |
| Comparative Example 1-2 | F | 3000 | 130 | $\gamma$ | 99.99 | 7.0 | 10.0 | 4.5 | - |
| Comparative Example 1-3 | G | | 650 | - | 98.00 | 0.8 | 6.0 | 1.5 | ++ |
| Comparative Example 1-4 | H | | 230 | - | 97.50 | 1.0 | 13.0 | 1.6 | ++ |
| Comparative Example 1-5 | I | | 210 | - | 90.00 | 0.9 | 10.0 | 1.7 | ++ |
| Comparative Example 1-6 | J | 1600 | 200 | $\gamma$ | 99.90 | 2.3 | 16.0 | 2.5 | + |
| Comparative Example 1-7 | K | 1000 | 600 | - | 99.90 | 1.5 | 6.7 | 1.5 | ++ |
| Comparative Example 1-8 | L | 1600 | 350 | $\beta$ | 99.90 | 2.6 | 8.2 | 1.9 | ++ |
| Comparative Example 1-9 | M | 1600 | 530 | - | 99.90 | 2.1 | 6.9 | 2.0 | + |
| Comparative Example 1-10 | N | 1600 | 150 | $\alpha$ | 99.90 | 3.1 | 10.5 | 2.8 | + |

(Example 2-1)

In a stainless steel container, 95.5 parts of N-methyl-2-pyrrolidone (NMP) and 1.5 parts by mass of the dispersant (A) (polyvinylpyrrolidone (manufactured by Nippon Shokubai Co., Ltd., K-30, weight average molecular weight 40,000)) were added and stirred with a disperser until uniform. Subsequently, 3.0 parts by mass of the carbon material (A) were added while being stirred with a disperser, and a square hole high shear screen was mounted in a high shear mixer (L5M-A, manufactured by SILVERSON), the entire mixture was made uniform at the speed of 8,600 rpm, and batch-type dispersion was performed until the dispersion particle size as measured by using a grind gauge became equal to or less than 250 $\mu$m. Next, the contents of the stainless steel container were transferred, and a circulation-type dispersion process was performed for a residence time of 10 minutes by using a bead mill (Dyno-mill MULTI LAB, manufactured by Shinmaru Enterprises Co., Ltd.) filled with zirconia beads with a diameter of 1.0 mm$\varphi$. Subsequently, the dispersed liquid was supplied to a high-pressure homogenizer through piping, and pass-type dispersion process was performed 15 times. The dispersion process was performed by using a single nozzle chamber with a nozzle diameter of 0.25 mm and a pressure of 100 MPa. After that, the mixture was arranged to pass through a nylon mesh with an opening of 20 $\mu$m via a mag filter with a surface magnetic flux density of 17,000 gauss to obtain a carbon material dispersion composition (A1) containing 3.0 parts by mass of the carbon material (A).

(Examples 2-2 to 2-12), (Comparative Examples 2-1 to 2-10)

Carbon material dispersion compositions (A2) to (N1) of (Examples 2-2) to (Comparative Examples 2-12) were obtained by the same method, except for changes in the carbon materials, dispersants, and dispersion conditions as listed in Table 2.

Table 2 shows the evaluation results of the dispersion compositions prepared in (Examples 2-1 to 2-12) and (Comparative Examples 2-1 to 2-10).

[Table 2]

| Carbon material dispersion composition | | Dispersion condition | | Carbon material | | Dispersant | | | NMP | Evaluation result | | |
|---|---|---|---|---|---|---|---|---|---|---|---|---|
| | | Cycle-type dispersion processing time [hr] | Number of passes | Type | Addition amount (Part(s)) | Type | Addition amount (Part(s)) | Amount of dispersant/100parts of carbon material | Addition amount (Part(s)) | Initial viscosity | TI value | Stability over time |
| Example 2-1 | A1 | 10 | 15 | A | 3.0 | A | 1.5 | 50 | 95.5 | + | + | + |
| Example 2-2 | A2 | 20 | 15 | A | 3.0 | A | 1.5 | 50 | 95.5 | + | + | + |
| Example 2-3 | A3 | 30 | 15 | A | 3.0 | A | 1.5 | 50 | 95.5 | + | + | + |
| Example 2-4 | A4 | 10 | 20 | A | 3.0 | A | 1.5 | 50 | 95.5 | ++ | ++ | ++ |
| Example 2-5 | A5 | 10 | 30 | A | 3.0 | A | 1.5 | 50 | 95.5 | ++ | ++ | ++ |
| Example 2-6 | A6 | 10 | 15 | A | 3.0 | A | 0.9 | 30 | 86.1 | + | ++ | + |
| Example 2-7 | A7 | 10 | 15 | A | 3.0 | A | 3.0 | 100 | 94.0 | + | + | ++ |
| Example 2-8 | A8 | 10 | 15 | A | 3.0 | B | 1.5 | 50 | 95.5 | + | + | + |
| Example 2-9 | A9 | 10 | 15 | A | 3.0 | C | 1.5 | 50 | 95.5 | ++ | ++ | ++ |
| Example 2-10 | B1 | 20 | 15 | B | 3.0 | A | 1.5 | 50 | 95.5 | ++ | ++ | ++ |
| Example 2-11 | C1 | 20 | 15 | C | 3.0 | A | 1.5 | 50 | 95.5 | ++ | ++ | ++ |
| Example 2-12 | D1 | 20 | 15 | D | 3.0 | A | 1.5 | 50 | 95.5 | ++ | ++ | ++ |
| Comparative Example 2-1 | E1 | 20 | 15 | E | 3.0 | A | 1.5 | 50 | 95.5 | ++ | + | ++ |
| Comparative Example 2-2 | F1 | 20 | 15 | F | 3.0 | A | 1.5 | 50 | 95.5 | ++ | - | ++ |
| Comparative Example 2-3 | G1 | 20 | 15 | G | 3.0 | A | 1.5 | 50 | 95.5 | - | + | - |
| Comparative Example 2-4 | H1 | 20 | 15 | H | 3.0 | A | 1.5 | 50 | 95.5 | + | + | - |
| Comparative Example 2-5 | I1 | 20 | 15 | I | 3.0 | A | 1.5 | 50 | 95.5 | + | + | - |

(continued)

| Carbon material dispersion composition | | Dispersion condition | | Carbon material | | Dispersant | | | NMP | Evaluation result | | |
|---|---|---|---|---|---|---|---|---|---|---|---|---|
| | | Cycle-type dispersion processing time [hr] | Number of passes | Type | Addition amount (Part(s)) | Type | Addition amount (Part(s)) | Amount of dispersant/100parts of carbon material | Addition amount (Part(s)) | Initial viscosity | TI value | Stability over time |
| Comparative Example 2-6 | J1 | 20 | 15 | J | 3.0 | A | 1.5 | 50 | 95.5 | + | + | - |
| Comparative Example 2-7 | K1 | 20 | 15 | K | 3.0 | A | 1.5 | 50 | 95.5 | - | - | - |
| Comparative Example 2-8 | L1 | 20 | 15 | L | 3.0 | A | 1.5 | 50 | 95.5 | - | - | - |
| Comparative Example 2-9 | M1 | 20 | 15 | M | 3.0 | A | 1.5 | 50 | 95.5 | - | - | - |
| Comparative Example 2-10 | N1 | 20 | 15 | N | 3.0 | A | 1.5 | 50 | 95.5 | + | + | - |

(Example 2-13)

<Preparation of single-layered carbon nanotube dispersion composition (S1)>

While 97.6 parts of NMP were added to a stainless steel container and stirred with a disperser, 2.0 parts of polyvinylidene fluoride resin (Solef 5130, manufactured by Solvay) were added and stirred with the disperser until Solef 5130 dissolved. Subsequently, 0.4 parts of single-layered carbon nanotubes (TUBALL: manufactured by OCSiAl, carbon purity 93%) were measured and added while stirring with the disperser. A square-hole high-shear screen was attached to a high-shear mixer (L5M-A, manufactured by SILVERSON), and batch-type dispersion was performed at a speed of 8,600 rpm until the entire mixture became uniform. Then, the dispersed liquid was supplied from the stainless steel container through piping to a high-pressure homogenizer (Starburst Lab HJP-17007, manufactured by Sugino Machine) and subjected to a pass-type dispersion process 5 times to obtain the single-layered carbon nanotube dispersion composition (S1). The dispersion process was performed by using a single nozzle chamber, with a nozzle diameter of 0.25 mm and a pressure of 60 MPa.

The BET specific surface area of the single-layered carbon nanotubes (TUBALL: manufactured by OCSiAl, carbon purity 93%) was 975 $m^2$/g.

<Preparation of carbon material dispersion composition>

Subsequently, 33.3 parts of the dispersion composition (A1) prepared in Example 2-1 and 24 parts of NMP were added to 66.7 parts of the single-layered carbon nanotube dispersion composition (S1), and the mixture was stirred with a disperser until uniform to obtain a dispersion composition (A1S1-1). The solid content of the dispersion composition (A1S1-1) was 2.5%.

(Example 2-14)

A carbon material dispersion composition (A1S1-2) was obtained in the same manner as in Example 2-13, except that 50 parts of the single-layered carbon nanotube dispersion composition (S1) were used instead of 66.7 parts of the single-layered carbon nanotube dispersion composition (S1), 50 parts of the carbon material dispersion composition (A1) were used instead of 33.3 parts of the carbon material dispersion composition (A1), and 18 parts of NMP were used instead of 24 parts of NMP. The solid content of carbon material dispersion composition (A1S1-2) was 2.5%.

(Example 2-15)

A carbon material dispersion composition (A1S1-3) was obtained in the same manner as in Example 2-13, except that 33.3 parts of the single-layered carbon nanotube dispersion composition (S1) were used instead of 66.7 parts of the single-layered carbon nanotube dispersion composition (S1), 66.7 parts of the carbon material dispersion composition (A1) were used instead of 33.3 parts of the carbon material dispersion composition (A1), and 52 parts of NMP were used instead of 24 parts of NMP. The solid content of carbon material dispersion composition (A1S1-3) was 2.5%.

(Example 2-16)

A carbon material dispersion composition (A1S1-4) was obtained in the same manner as in Example 2-13, except that 20 parts of the single-layered carbon nanotube dispersion composition (S1) were used instead of 66.7 parts of the single-layered carbon nanotube dispersion composition (S1), 80 parts of the carbon material dispersion composition (A1) were used instead of 33.3 parts of the carbon material dispersion composition (A1), and 63 parts of NMP were used instead of 24 parts of NMP. The solid content of carbon material dispersion composition (A1S1-4) was 2.5%.

Table 3 shows the evaluation results of the dispersion compositions prepared in (Examples 2-13 to 2-16.

[Table 3]

| Carbon material dispersion composition | | Dispersion composition (I) | | Dispersion composition (II) | | Carbon material | | | | Fluorine resin | | | Evaluation result | |
|---|---|---|---|---|---|---|---|---|---|---|---|---|---|---|
| | | Type | Addition amount (part(s)) | Type | Addition amount (part(s)) | Type | Addition amount (part(s)) | Type | Addition amount (part(s)) | Type | Addition amount (part(s)) | Fluorine resin/100parts of carbon material | TI value | Stability over time |
| Example 2-13 | A1S1-1 | A1 | 33.3 | S1 | 66.7 | Carbon material (A) | 1.0 | Single-layer CNT | 0.27 | A | 1.83 | 183.0 | + | + |
| Example 2-14 | A1S1-2 | A1 | 50 | S1 | 50 | Carbon material (A) | 1.0 | Single-layer CNT | 0.20 | A | 1.75 | 175.0 | + | + |
| Example 2-15 | A1S1-3 | A1 | 66.7 | S1 | 33.3 | Carbon material (A) | 1.1 | Single-layer CNT | 0.14 | A | 1.67 | 151.8 | + | + |
| Example 2-16 | A1S1-4 | A1 | 80 | S1 | 20 | Carbon material (A) | 0.8 | Single-layer CNT | 0.22 | A | 1.60 | 200.0 | + | + |

(Example 3-1)

In a plastic container with a capacity of 150 cm$^3$, 6.3 parts by mass of an NMP solution in which 8 mass% of PVDF (polyvinylidene fluoride, manufactured by Solvey, Solef#5130) was dissolved and 20 parts by mass of NMP were measured. Then, 8.3 parts by mass of the carbon material dispersion composition (A1) were added, and the mixture was stirred for 30 seconds at 2000 rpm by using a rotation/revolution mixer (AWATORI RENTARO, ARE-310). Subsequently, 98.7 parts by mass of the positive electrode active substance (manufactured by BASF TODA Battery Materials LLC, HED (registered trademark) NCM-111 1100) were added, and the mixture was stirred for 2.5 minutes at 2000 rpm using a rotation/revolution mixer (AWATORI RENTARO, ARE-310) to obtain a mixture slurry (A1).

Then, the mixture slurry (A1) was coated onto an aluminum foil by using an applicator to achieve a weight per unit area of 20 mg/cm$^2$ for the electrode. The coated film was then dried in an electric oven at 120°C $\pm$ 5°C for 25 minutes. After that, the electrode film (A1) was subjected to a rolling process by using a roll press (manufactured by Sankumetal, 3t hydraulic roll press) to obtain a positive electrode (A1). The weight per unit area of the mixture layer was 20 mg/cm$^2$, and the density of the mixture layer after the rolling process was set to 3.1 g/cc.

(Examples 3-2 to 3-16), (Comparative Examples 3-1 to 3-10)

Mixture slurries (A2) to (N1) were obtained by the same method as the preparation of the mixture slurry (A1), except that dispersion compositions (A2) to (N1) were used instead of the dispersion composition (A1) as described in Table 4.

Subsequently, as described in Table 4, electrode films (A2) to (N1) and positive electrodes (A2) to (N1) were prepared by the same method as the preparation of the positive electrode (A1), except that the mixture slurries (A2) to (N1) were used instead of mixture slurry (A1).

Table 4 shows the evaluation results of the electrode films prepared in Examples 3-1 to 3-16 and Comparative Examples 3-1 to 3-10.

[Table 4]

| Electrode film | | Mixture slurry | Carbon material dispersion composition | Evaluation result | |
|---|---|---|---|---|---|
| | | | | Volume resistivity | Peeling strength |
| Example 3-1 | A1 | A1 | A1 | ++ | ++ |
| Example 3-2 | A2 | A2 | A2 | + | + |
| Example 3-3 | A3 | A3 | A3 | + | + |
| Example 3-4 | A4 | A4 | A4 | ++ | ++ |
| Example 3-5 | A5 | A5 | A5 | + | ++ |
| Example 3-6 | A6 | A6 | A6 | + | ++ |
| Example 3-7 | A7 | A7 | A7 | + | ++ |
| Example 3-8 | A8 | A8 | A6 | + | + |
| Example 3-9 | A9 | A9 | A7 | ++ | ++ |
| Example 3-10 | B1 | B1 | B1 | ++ | ++ |
| Example 3-11 | C1 | C1 | C1 | ++ | ++ |
| Example 3-12 | D1 | D1 | D1 | + | ++ |
| Example 3-13 | A1S1-1 | A1S1-1 | A1S1-1 | ++ | ++ |
| Example 3-14 | A1S1-2 | A1S1-2 | A1S1-2 | ++ | ++ |
| Example 3-15 | A1S1-2 | A1S1-3 | A1S1-3 | ++ | ++ |
| Example 3-16 | A1S1-4 | A1S1-4 | A1S1-4 | ++ | ++ |
| Comparative Example 3-1 | E1 | E1 | E1 | - | - |
| Comparative Example 3-2 | F1 | F1 | F1 | - | - |
| Comparative Example 3-3 | G1 | G1 | G1 | + | - |

(continued)

| Electrode film | | Mixture slurry | Carbon material dispersion composition | Evaluation result | |
|---|---|---|---|---|---|
| | | | | Volume resistivity | Peeling strength |
| Comparative Example 3-4 | H1 | H1 | H1 | - | - |
| Comparative Example 3-5 | I1 | I1 | I1 | - | - |
| Comparative Example 3-6 | J1 | J1 | J1 | - | - |
| Comparative Example 3-7 | K1 | K1 | K1 | + | - |
| Comparative Example 3-8 | L1 | L1 | L1 | + | - |
| Comparative Example 3-9 | M1 | M1 | M1 | + | - |
| Comparative Example 3-10 | N1 | N1 | N1 | - | - |

(Example 4-1)

The positive electrode (A1) and a standard negative electrode were punched out in a size of 45 mm × 40 mm and 50 mm × 45 mm, respectively, and inserted into an aluminum laminate together with a separator (porous polypropylene film) to be placed between them, and dried in an electric oven at 60°C for 1 hour. Subsequently, 2 mL of electrolyte (a mixed solvent was prepared by mixing, at a ratio (volume ratio) of 1:1:1, ethylene carbonate, ethyl methyl carbonate, and dimethyl carbonate, and, as an additive, 2 parts by mass of vinylene carbonate (VC) were added to 10 parts by mass of the mixed solvent, and then a laminate-type lithium-ion secondary battery (A1) was prepared by sealing an aluminum-made laminate) was injected into a glove box filled with argon. After that, an aluminum-made laminate was sealed to prepare a laminate-type lithium-ion secondary battery (A1).

(Examples 4-2 to 4-16), (Comparative Examples 4-1 to 4-10)

Laminate-type lithium-ion secondary batteries (A2) to (N1) were prepared by the same method as the preparation of the laminate-type lithium-ion secondary battery (A1), except that the positive electrodes were changed to those listed in Table 5.
Table 5 shows the evaluation results of the lithium-ion secondary batteries prepared in (Examples 4-1 to 4-16) and (Comparative Examples 4-1 to 4-10).

[Table 5]

| Secondary battery | | Positive electrode | Evaluation result | |
|---|---|---|---|---|
| | | | Rate properties | Cycle properties |
| Example 4-1 | A1 | A1 | ++ | ++ |
| Example 4-2 | A2 | A2 | + | + |
| Example 4-3 | A3 | A3 | + | + |
| Example 4-4 | A4 | A4 | ++ | ++ |
| Example 4-5 | A5 | A5 | + | ++ |
| Example 4-6 | A6 | A6 | + | ++ |
| Example 4-7 | A7 | A7 | + | ++ |
| Example 4-8 | A8 | A8 | + | ++ |
| Example 4-9 | A9 | A9 | +++ | ++ |
| Example 4-10 | B1 | B1 | ++ | ++ |
| Example 4-11 | C1 | C1 | + | ++ |
| Example 4-12 | D1 | D1 | + | + |
| Example 4-13 | A1S1-1 | A1S1-1 | +++ | +++ |

(continued)

| Secondary battery | | Positive electrode | Evaluation result | |
|---|---|---|---|---|
| | | | Rate properties | Cycle properties |
| Example 4-14 | A1S1-2 | A1S1-2 | +++ | +++ |
| Example 4-15 | A1S1-3 | A1S1-3 | +++ | +++ |
| Example 4-16 | A1S1-4 | A1S1-4 | +++ | +++ |
| Comparative Example 4-1 | E1 | E1 | - | - |
| Comparative Example 4-2 | F1 | F1 | - | - |
| Comparative Example 4-3 | G1 | G1 | + | - |
| Comparative Example 4-4 | H1 | H1 | - | - |
| Comparative Example 4-5 | I1 | I1 | - | - |
| Comparative Example 4-6 | J1 | J1 | - | - |
| Comparative Example 4-7 | K1 | K1 | + | - |
| Comparative Example 4-8 | L1 | L1 | + | - |
| Comparative Example 4-9 | M1 | M1 | + | - |
| Comparative Example 4-10 | N1 | N1 | - | - |

In the examples, carbon materials with a BET specific surface area of 400 $m^2/g$ to 650 $m^2/g$ were used, which have two peaks in the range of a diffraction angle $2\theta = 24.0°$ to $27.0°$ in the powder X-ray diffraction analysis. In the examples, compared to the comparative examples, the carbon material dispersion compositions exhibited excellent stability over time, and the electrode films prepared using the compositions showed superior volume resistivity and peel strength. As a result, lithium-ion secondary batteries with excellent rate properties and cycle properties were obtained. Therefore, it became clear that the invention can provide lithium-ion secondary batteries with high capacity, high output, and high durability, which are difficult to achieve with conventional carbon material dispersion compositions. It can be confirmed that vehicles having the lithium-ion secondary batteries of the invention can achieve high safety and improved fuel efficiency, as the batteries possess high charge-discharge performance and excellent cycle properties.

The invention has been described with reference to the embodiments, but the invention is not limited to the descriptions. Various modifications can be made to the structure and details of the invention within the scope of the invention as understood by those skilled in the art.

The disclosure of the present application is related to the subject matter described in Japanese Patent Application No. 2022-187584 filed on November 24, 2022, the entire contents of which are incorporated herein by reference.

**Claims**

1. A carbon material, comprising multi-layered carbon nanotubes and satisfying (1) and (2) as follows:

    (1) a BET specific surface area is 400 $m^2/g$ to 650 $m^2/g$; and
    (2) in a powder X-Ray diffraction analysis, at least two peaks are present within a range of a diffraction angle $2\theta=24.0°-27.0°$.

2. The carbon material as claimed in claim 1, wherein in the powder X-Ray diffraction analysis, when a low-angle side peak intensity is set as A and a high-angle side peak intensity is set as B within the range of the diffraction angle $2\theta=24.0°-27.0°$, a B/A ratio is 1.0 to 2.5.

3. The carbon material as claimed in claim 1 or 2, wherein a carbon purity is 99.9 mass% or more.

4. The carbon material as claimed in any one of claims 1 to 3, wherein in a Raman spectrum, when a maximum peak intensity in a range of 1560 $cm^{-1}$ to 1600 $cm^{-1}$ is set as G and a maximum peak intensity in a range of 1310 $cm^{-1}$ to 1350 $cm^{-1}$ is set as D, a G/D ratio is 1.0 to 4.5.

5. A carbon material dispersion composition, comprising: the carbon material as claimed in any one of claims 1 to 4; a dispersant; and a dispersion medium.

6. The carbon material dispersion composition as claimed in claim 5, wherein, after the carbon material dispersion composition is prepared, a viscosity of the carbon material dispersion composition, after being stored for a week under a condition of 60°C, obtained by measuring at 25°C and a rotor rotation speed of 6 rpm by using a B-type viscometer is 500 mPa·s to 20,000 mPa·s.

7. The carbon material dispersion composition as claimed in claim 5 or 6, comprising a fluorine resin.

8. A mixture slurry, comprising: the carbon material dispersion composition as claimed in any one of claims 5 to 7; and an active substance.

9. An electrode film, formed from the mixture slurry as claimed in claim 8.

10. A secondary battery, comprising: an electrode, having the electrode film claimed in claim 9; and an electrolyte.

11. A vehicle, comprising the secondary battery as claimed in claim 10.

12. A method for preparing a carbon material dispersion composition, comprising a process of mixing: a carbon material dispersion composition (I) comprising a carbon material, a dispersant, and a dispersion medium; and a carbon material dispersion composition (II), excluding a case of being the carbon material dispersion composition (I), and comprising: single-layered carbon nanotubes and a fluorine resin,
wherein the carbon material comprises multi-layered carbon nanotubes and satisfies (1) and (2) as follows:

(1) a BET specific surface area is 400 $m^2$/g to 650 $m^2$/g; and
(2) in a powder X-Ray diffraction analysis, at least two peaks are present within a range of a diffraction angle $2\theta=24.0°-27.0°$.

FIG. 1

## INTERNATIONAL SEARCH REPORT

| | International application No. |
|---|---|
| | **PCT/JP2023/040137** |

**A. CLASSIFICATION OF SUBJECT MATTER**

*C01B 32/168*(2017.01)i; *H01M 4/62*(2006.01)i; *H01M 4/139*(2010.01)i
FI: C01B32/168; H01M4/62 Z; H01M4/139

According to International Patent Classification (IPC) or to both national classification and IPC

**B. FIELDS SEARCHED**

Minimum documentation searched (classification system followed by classification symbols)

C01B32/00-32/991; H01M4/00-4/62; H01M4/139

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-001960 A (TOYO INK SC HOLDINGS CO., LTD.) 09 January 2020 (2020-01-09) entire text | 1-12 |
| A | JP 2022-014871 A (TOYO INK SC HOLDINGS CO., LTD.) 20 January 2022 (2022-01-20) entire text | 1-12 |
| A | WO 2018/168346 A1 (ZEON CORP.) 20 September 2018 (2018-09-20) entire text | 1-12 |
| A | JP 2022-079409 A (TOYO INK SC HOLDINGS CO., LTD.) 26 May 2022 (2022-05-26) entire text | 1-12 |
| A | JP 2021-059473 A (TOKAI CARBON CO., LTD.) 15 April 2021 (2021-04-15) entire text | 1-12 |
| A | WO 2014/115560 A1 (ZEON CORP.) 31 July 2014 (2014-07-31) entire text | 1-12 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 January 2024** | **23 January 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (July 2022)

## INTERNATIONAL SEARCH REPORT
### Information on patent family members

International application No.

**PCT/JP2023/040137**

| Patent document cited in search report | | | Publication date (day/month/year) | Patent family member(s) | | | Publication date (day/month/year) |
|---|---|---|---|---|---|---|---|
| JP | 2020-001960 | A | 09 January 2020 | US | 2021/0226222 | A1 | |
| | | | | entire text | | | |
| | | | | EP | 003816103 | A1 | |
| | | | | entire text | | | |
| | | | | KR | 10-2021-0013224 | A | |
| | | | | CN | 112424117 | A | |
| JP | 2022-014871 | A | 20 January 2022 | US | 2023/0242402 | A1 | |
| | | | | entire text | | | |
| | | | | EP | 004181227 | A1 | |
| | | | | entire text | | | |
| | | | | KR | 10-2023-0034966 | A | |
| | | | | CN | 115884939 | A | |
| WO | 2018/168346 | A1 | 20 September 2018 | CN | 110366536 | A | |
| | | | | KR | 10-2019-0127709 | A | |
| JP | 2022-079409 | A | 26 May 2022 | CN | 115997301 | A | |
| | | | | entire text | | | |
| | | | | KR | 10-2023-0107202 | A | |
| JP | 2021-059473 | A | 15 April 2021 | (Family: none) | | | |
| WO | 2014/115560 | A1 | 31 July 2014 | US | 2015/0368108 | A1 | |
| | | | | entire text | | | |
| | | | | EP | 002949624 | A1 | |
| | | | | entire text | | | |
| | | | | CN | 104936895 | A | |
| | | | | KR | 10-2015-0110549 | A | |

Form PCT/ISA/210 (patent family annex) (July 2022)

**EP 4 624 419 A1**

**REFERENCES CITED IN THE DESCRIPTION**

**Patent documents cited in the description**

- JP 6586197 B
- JP 2011070908 A
- JP 6590034 B

- JP 6933285 B
- JP 6801806 B
- JP 2022187584 A